Europäisches Patentamt

European Patent Office

Office européen des brevets

(11) Veröffentlichungsnummer : **0 118 802 B1**

(12) **EUROPÄISCHE PATENTSCHRIFT**

(45) Veröffentlichungstag der Patentschrift : 07.05.86

(51) Int. Cl.⁴ : **H 02 K 9/10, H 02 K 9/02**

(21) Anmeldenummer : **84101717.1**

(22) Anmeldetag : **20.02.84**

(54) **Gasgekühlte Wechselstrommaschine.**

(30) Priorität : **10.03.83 CH 1304/83**

(43) Veröffentlichungstag der Anmeldung :
**19.09.84 Patentblatt 84/38**

(45) Bekanntmachung des Hinweises auf die Patenterteilung : **07.05.86 Patentblatt 86/19**

(84) Benannte Vertragsstaaten :
**CH DE FR GB IT LI SE**

(56) Entgegenhaltungen :
DE-B- 1 039 617
DE-B- 1 231 797
DE-C- 372 328
DE-C- 688 174
US-A- 1 672 680
US-A- 3 819 965

(73) Patentinhaber : **BBC Aktiengesellschaft Brown, Boveri & Cie.**
**Haselstrasse**
**CH-5401 Baden (CH)**

(72) Erfinder : **Prenner, Herbert**
**Breite 2b**
**CH-5200 Windisch (CH)**
Erfinder : **Schröder, Paul**
**Obere Kirchzelg 7**
**CH-5430 Wettingen (CH)**

**Beschreibung**

Die Erfindung bezieht sich auf eine gasgekühlte Wechselstrommaschine mit einem Statormittelteil und zwei Statorendteilen, und mit einem Ventilator an jedem Rotorende, wobei das das Mittelteil bildende, zwischen zwei Endplatten eingespannte Statorblechpaket, durch radial verlaufende Kühlkanäle in einzelne Teilpakete unterteilt ist, wobei die Kühlkanäle durch Distanzstege oder -bolzen gebildet sind, die auf einer Kanalseite auf einem Teilpaket-Endblech befestigt sind, und das Statorblechpaket von einem Gehäuse umgeben ist.

Eine elektrische Maschine dieser Gattung ist beispielsweise aus dem Buch von Wiedemann/Kellenberger « Konstruktion elektrischer Maschinen », Springer-Verlag, Berlin, Heidelberg, New York, 1967, Seite 548, Abb. 473b, bekannt.

Das von den Ventilatoren geförderte Kühlgas strömt einerseits durch den Wickelkopfraum und kühlt die Wickelköpfe und wird andererseits durch axiale und radiale Kühlkanäle des Rotorkörpers und durch radiale Kühlkanäle des Statorkörpers geleitet und kühlt ebenfalls den Rotor- und den Statorkörper. Nach Austritt des Kühlgases aus den radialen Kühlkanälen des Statorkörpers, sowie nach dem Durchtritt des Kühlgases aus dem Wickelkopfraum durch die Statorblechkörperpressplatten gelangt es in den Kühlgasausströmraum im Mittelteil der elektrischen Maschine, welcher sich zwischen dem Statorrücken und dem Maschinengehäuse befindet und entweicht von dort aus ins Freie bzw. wird einer Kühlanlage ausserhalb der Maschine zur Rückkühlung des erwärmten Kühlgases zugeführt.

Bei einer elektrischen Maschine, deren Kühlgasausströmräume aus konstruktiven Gründen über die gesamte axiale Länge in Umfangsrichtung durch das Statorblechpaket in einzelne, voneinander getrennte Abschnitte unterteilt ist, d. h., wenn der Ringraum zwischen Blechpaket und Maschinengehäuse entfällt, ist die beschriebene Kühlgasabführung nur unter erschwerten Bedingungen möglich. Dies gilt sowohl für eine direkte Kühlgasabfuhr ins Freie aus jedem Abschnitt des Ausströmraumes, als auch bei einer Verbindung der einzelnen Abschnitte untereinander und einer zentralen Abführung des Kühlgases. Im ersten Fall würde erwärmtes Kühlgas an mehreren Stellen aus der Maschine entweichen, was einerseits die Umgebung belasten und eine Rückkühlung des erwärmten Kühlgases verunmöglichen würde, und im zweiten Falle wären zusätzliche Bauteile, insbesondere Rohrverbindungen und Anschlussstücke erforderlich, die aussen am Maschinengehäuse angebracht werden müssten. Dadurch würden aber zusätzliche Strömungswege für das Kühlgas geschaffen, die überdies nicht direkt in den Statorkörper integriert werden könnten. Zudem müssten Schutzverkleidungen für diese extern angeordneten Verbindungsleitungen vorgesehen werden und es würde ein grösserer Platzbedarf für den Mittelteil der elektrischen Maschine benötigt.

Ausgehend vom vorstehend geschilderten Stand der Technik liegt der Erfindung die Aufgabe zugrunde, ein Kühlsystem für elektrische Maschinen zu schaffen, deren Kühlgasausströmraum zwischen dem Statorrücken und dem Maschinengehäuse über die gesamte axiale Länge des Statormittelteils unterbrochen und in einzelne, nicht miteinander in Verbindung stehende Teilkühlgasausströmräume unterteilt ist, mit welchem Kühlsystem sowohl die Statorwickelköpfe als auch der Rotor- und Statorkörper mit einfachen Mitteln optimal gekühlt, und das Kühlsystem auf einfache Weise in die Bauform der elektrischen Maschine integriert werden kann.

Die Lösung dieser Aufgabe erfolgt durch die im Patentanspruch 1 gekennzeichnete Erfindung.

Die durch die Erfindung erreichten Vorteile sind im wesentlichen die folgenden :

Durch Parallelschaltung und gezielte Führung von zwei Kühlgasströmungswegen, und zwar einmal durch den Rotor- und Statorkörper, zum anderen durch den Wickelkopf, werden sämtliche Maschinenteile optimal gekühlt.

Die Ausbildung der Statorendteile als Kühlgaseintritts und -austrittsgehäuse und die Integrierung des Kühlsystems innerhalb des Maschinengehäuses ergibt eine kompakte Maschinenkonstruktion mit einer zentralen Kühlgaszufuhr und -abfuhr in je einem der beiden Statorendteile, wobei auf alle zusätzlichen Bauteile, ausserhalb des Maschinengehäuses verzichtet werden kann.

Die Weiterbildung der Erfindung gemäss den Ansprüchen 2 bis 4 ermöglicht einen kompakten Aufbau von Statormittel und Statorendteil ohne die Achshöhe und Maschinengesamtbreite wesentlich zu vergrössern.

Entsprechend Anspruch 5 sind die Mittel zur Kühlgasmengenvariation durch Abschlussdeckel gebildet, die über den Bypassöffnungen in einer Führungseinrichtung verschiebbar angeordnet sind. Der Vorteil besteht darin, dass mit einfachem konstruktiven Aufbau der Abschlussdeckel und einer leichten manuellen Handhabung eine unmittelbare Einflussnahme auf das Kühlsystem, insbesondere auf die Verteilung der in den beiden Kühlzweigen strömenden Kühlgasmengen, ermöglicht wird.

Gemäss Anspruch 6 liegt in der Kühlgasausströmkammer das Verhältnis der Summe der freien Querschnittsflächen der Bypassöffnungen in bezug auf die Summe der Querschnittsflächen der Durchbrüche im Bereich zwischen 0,15 bis 0,3.

Nach Anspruch 7 ist in der Kühlgasausströmkammer die Querschnittsfläche des Mittelteils der Kühlgasausströmkammer, welche sich aus dem Abstand des vertikalen mittleren Teiles der Trennwand von der Gehäusewand des Statorendteils und der axialen Länge der Trennwand ergibt, im Verhältnis zur Summe der Querschnittsfläche S1 des unteren Durchbruches und der freien Querschnittsfläche S3, der im unteren abgewinkelten Teil der Trennwand befindlichen Bypassöffnung und der halben freien Querschnittsfläche S4 der im mittleren Teil der Trennwand befindlichen Bypassöffnung, grösser als 1.

Der Vorteil der Erfindung nach Anspruch 6 und 7 besteht insbesondere darin, dass durch diese Bemessung der freien Querschnittsflächen der Durchbrüche und der Bypassöffnungen, dem Strömungswiderstand und somit der durchströmten Kühlgasmenge in den einzelnen Kühlzweigen hinsichtlich optimaler Kühlung aller zu kühlenden Maschinenteile Rechnung getragen wird.

Die Erfindung wird nachstehend anhand von Ausführungsbeispielen näher erläutert :

Es zeigt :

Figur 1 eine axonometrische, teilweise Schnittdarstellung des antriebsseitigen Statorendteils 2a und teilweise des Statormittelteils 1 ;

Figur 2 eine axonometrische teilweise Schnittdarstellung des der Antriebsseite gegenüberliegenden Statorendteils 2b und teilweise des Statormittelteils 1 ;

Figur 3 eine vergrösserte Draufsicht auf den Ausschnitt X gemäss Fig. 2, jedoch nicht in axonometrischer Darstellung ;

Figur 4 einen Längsschnitt durch das antriebsseitige Statorendteil 2a und teilweise durch das Statormittelteil 1 ;

Figur 5 einen Querschnitt durch das Statorendteil 2a gemäss Fig. 4 (Schnittebene V-V von Fig. 4), und

Figur 6 einen Querschnitt durch das Statormittelteil 1 gemäss Fig. 4 (Schnittebene VI-VI).

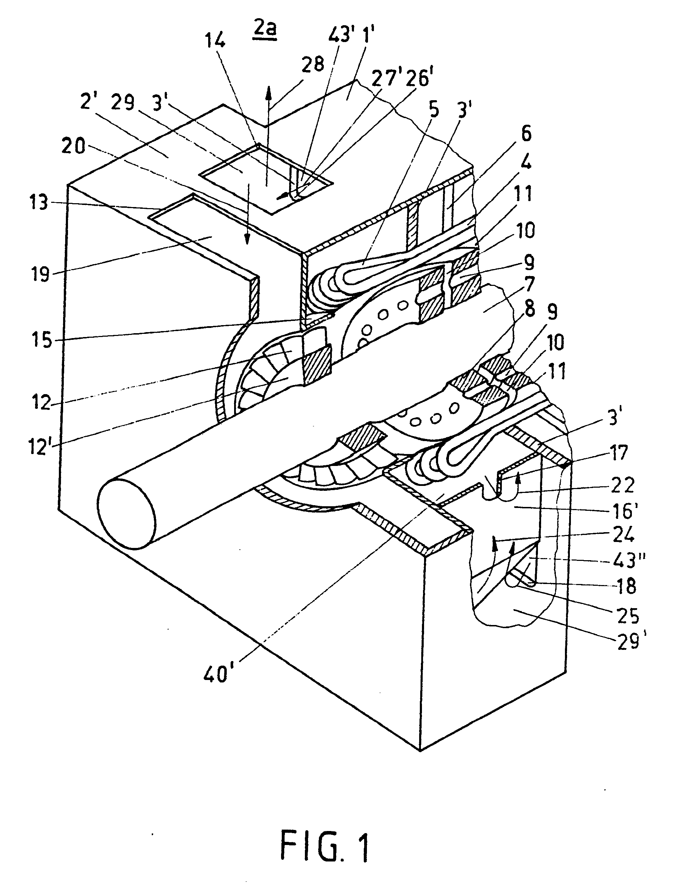

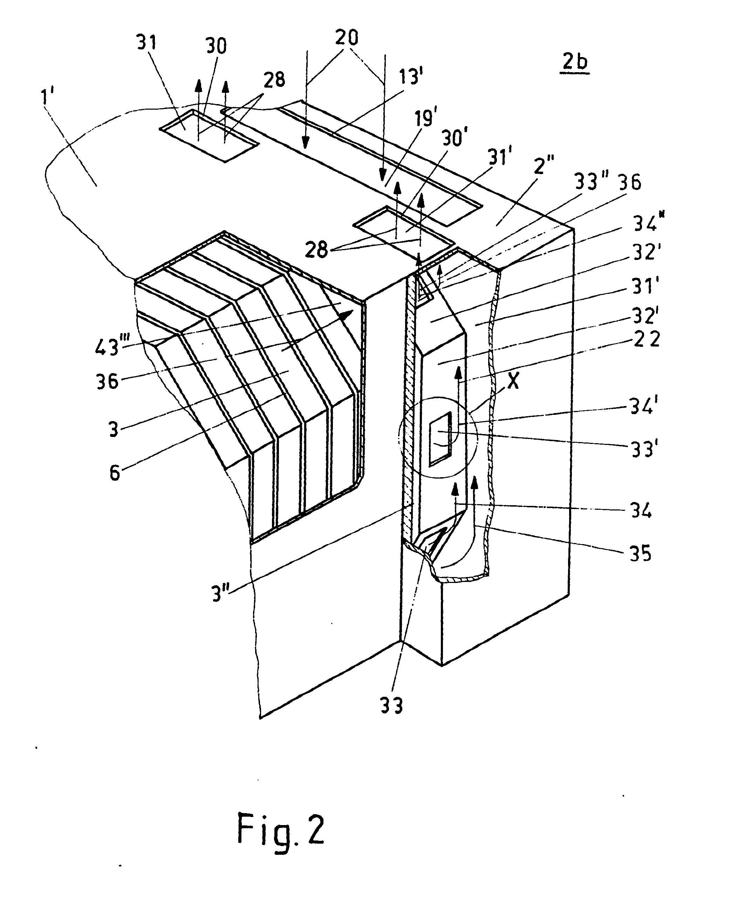

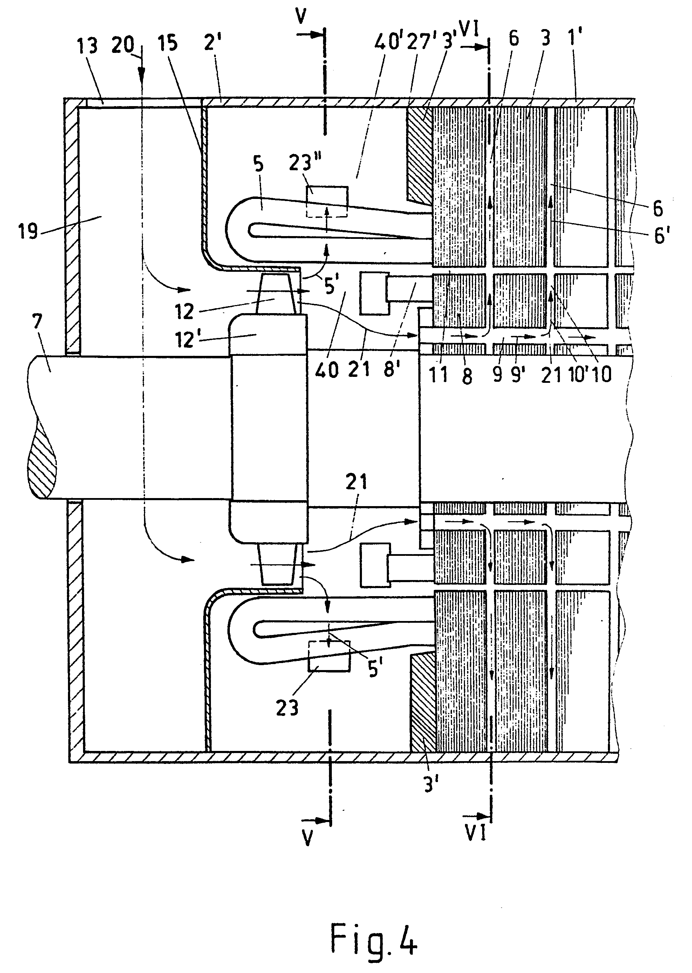

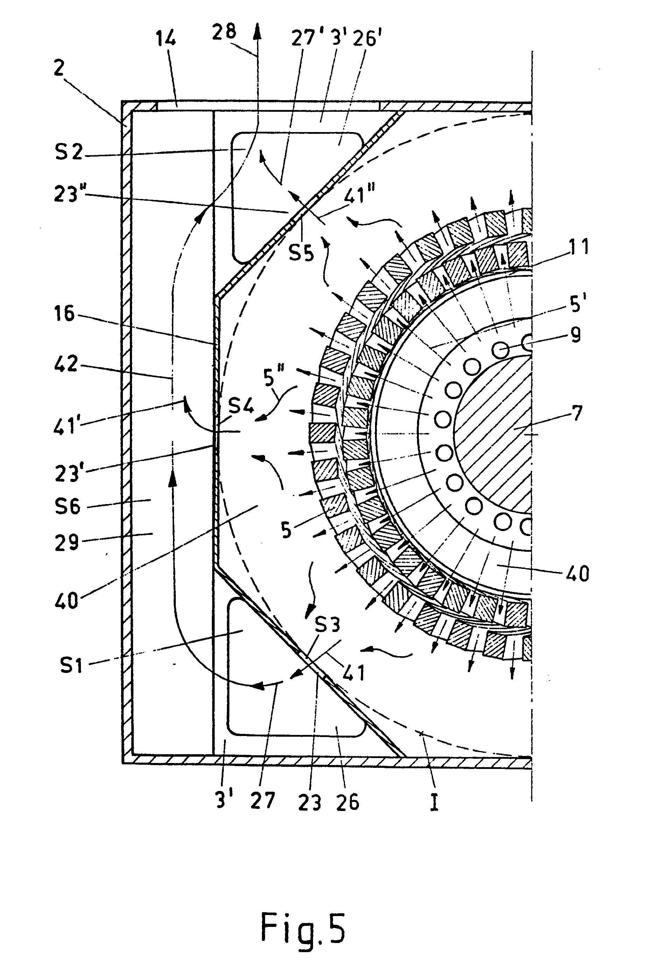

In Fig. 1 ist das antriebsseitige Statorendteil 2a und ein Stück des Statormittelteils 1 und in Fig. 2 das gegenüber der Antriebsseite sich befindende Statorendteil 2b und ebenfalls ein Stück des Statormittelteils 1 in axonometrischer und teilweiser Schnittdarstellung gezeigt. Die Höhe der beiden Statorendteile 2a, 2b entspricht annähernd derjenigen des Statormittelteils 1, jedoch stehen diese nach beiden Seiten hin gegenüber dem Statormittelteil 1 vor. Das Statormittelteil 1 besteht, in der beispielsweisen erfindungsgemässen Ausführungsform gemäss Fig. 1 und 2, aus einem Blechkörper 3, welcher an seinen Stirnflächen durch die Endplatten 3', 3'' begrenzt ist und dessen Aussenkontur die Form eines annähernd achsensymmetrischen Achtecks aufweist, wobei jede zweite aufeinanderfolgende Mantelfläche des Blechpakets 3 an der ihr zugeordneten Gehäusewand 1' anliegt. Die über die Mantelflächen des Blechpakets 3 hinausragenden Gehäusewände 1' bilden über die gesamte Länge des Statormittelteils 1 prismatische Kanäle 43, 43', 43'', 43''' aus. In Fig. 2 ist ein Teil des polygonal ausgebildeten Blechpakets 3 und des prismatischen Kanals 43'' zu sehen. Das Statorblechpaket 3 weist radiale Kühlkanäle 6 auf, die das Blechpaket 3 in einzelne Teilpakete unterteilen. Besonders in Fig. 2 ist dies gut zu erkennen. Das Rotorblechpaket 8 ist, wie Fig. 1 zeigt, auf der Welle 7 angeordnet. Das Rotorblechpaket 8 ist mit axialen 9- und radialen Kühlkanälen 10 versehen. Aus Gründen besserer Uebersicht wurde die Rotorwicklung in Fig. 1 weggelassen. Jedoch ist die Statorwicklung 4 gezeichnet, die ausserhalb der Endplatte 3' im Statorendteil 2a in den Wickelkopf 5 übergeht. Der Luftspalt zwischen dem Rotorblechpaket 8 und dem Statorblechpaket 3 ist mit der Bezugsziffer 11 bezeichnet. In den Statorendteilen 2a, 2b gemäss Fig. 1 und 2 befindet sich je ein Axialventilator 12, der mittels seiner Nabe 12' auf der Welle 7 befestigt ist. Der Axialventilator 12 ist nur im Statorendteil 2a in Fig. 1 zu sehen und diesem ist eine Verschalung 15 zur Kühlmittelführung zugeordnet. Die beiden Statorteile 2a, 2b sind je in vier Kammern unterteilt, die in Fig. 1 und 2 wegen der axonometrischen Schnittdarstellung nur zum Teil zu sehen sind. In den nachfolgenden Fig. 4 und 5 sind sie vollumfänglich und übersichtlich dargestellt.

Diese vier Kammern sind : Die Ansaugkammer 19, 19', die Wickelkopfkammer 40, 40' und zwei paarweise, symmetrisch zur Vertikalebene angeordnete Kühlgasausströmkammern 29, 29' für das Statorendteil 2a bzw. 31, 31' für das Statorendteil 2b. In Fig. 1 ist die linke Kühlgasausströmkammer 29 nur von aussen zu erkennen, während der obere Teil der rechten Kühlgasausströmkammer 29' weggeschnitten wurde, so dass lediglich der untere Teil dieser Kammer 29' zu sehen ist. In Fig. 2 ist nur die rechte Kühlgasausströmkammer 31' zu erkennen.

Die in Fig. 1 und 2 mit Bezugsziffern dargestellten Pfeile kennzeichnen die Kühlgasströmungsrichtung des erfindungsgemässen Kühlsystems. Bei der Beschreibung der Systemwirkungsweise, anschliessend an die Erläuterung der nachfolgenden Figuren, wird auf die Kühlgasströmungsrichtung gemäss Fig. 1 und 2 Bezug genommen.

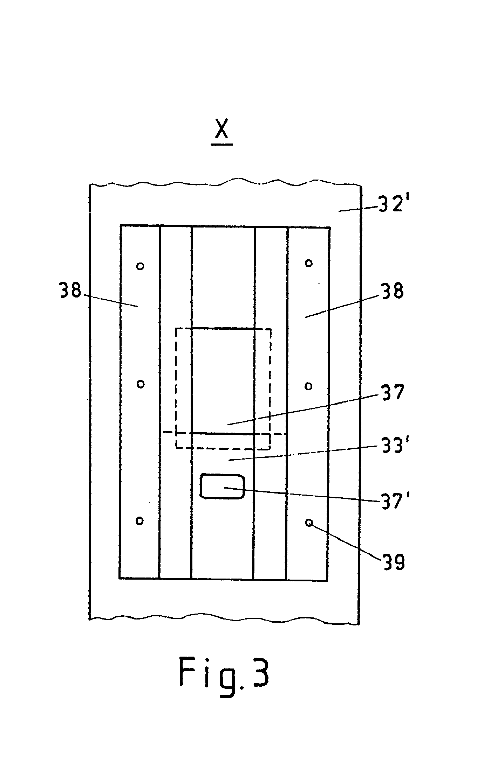

Fig. 3 zeigt eine vergrösserte Draufsicht auf den Ausschnitt X gemäss Fig. 2 jedoch nicht in axonometrischer Darstellung.

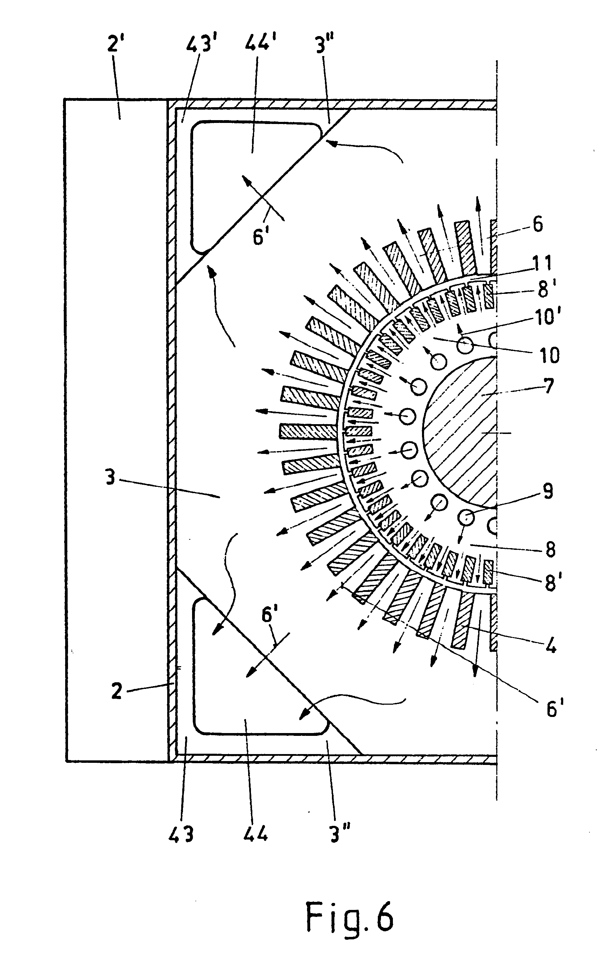

Die freie Querschnittsfläche der Bypassöffnung 33' kann mittels des Verschlussdeckels 37 mit dem Betätigungshebel 37' geregelt werden. Der Verschlussdeckel 37 ist innerhalb von Führungsschienen 38 verschiebbar angeordnet. Die Führungsschienen 38 sind beispielsweise mittels Punktschweissen an den Stellen 39 mit der Trennwand 32' verbunden. Auf diese Weise können sämtliche im Kühlkreislauf an den beiden Statorendteilen 2a, 2b vorkommenden Bypassöffnungen 17, 23, 23', 23''; 33, 33', 33'' geregelt werden. In den Fig. 1 bis 6 ist nur ein Teil der tatsächlich in den Statorendteilen 2a, 2b vorkommenden Bypassöffnungen dargestellt, nämlich die Bypassöffnung 17 im rechten Teil des Statorendteils 2a gemäss Fig. 1, die Bypassöffnungen 33, 33', 33'' im rechten Teil des Statorendteils 2b gemäss Fig. 2 und die Bypassöffnungen 23, 23', 23" im linken Teil des Statorendteils 2a gemäss Fig. 6.

Fig. 4 zeigt einen Längsschnitt durch das antriebsseitige Maschinenendteil 2a und teilweise durch das Mittelteil 1.

Hier ist sehr deutlich die Trennung der Ansaugkammer 19 und der Wickelkopfkammer 40 durch die ringförmige Verschalung 15 zu erkennen. In diesem Bild ist die Wickelkopfkammer 40 noch detaillierter in die innere Wickelkopfkammer 40 und die äussere Wickelkopfkammer 40' unterteilt, wobei die innere Wickelkopfkammer 40 mit dem eigentlichen Rotoreinströmraum identisch ist.

Die Trennung der Wickelkopfkammer 40 von der Kühlgasabströmkammer 29 durch die Trennwand 16 ist aus Fig. 5 ersichtlich.

In Fig. 4 sind untere und obere Bypassöffnungen 23, 23" nur andeutungsweise erkennbar und ausserdem unterscheiden sie sich von denjenigen der beispielsweisen Ausführungsform gemäss Fig. 1 und 2 sowohl in der Höhe als auch in der Breite. Es versteht sich von selbst, dass die Dimensionierung der Bypassöffnungen 17, 23, 23', 23" ; 33, 33', 33" und deren Anzahl in jeder Trennwand 16, 16', 32 vom jeweiligen Maschinentyp und der zu erzielenden Kühlwirkung in den einzelnen Maschinenteilen abhängt. In Fig. 4 ist ausserdem der aus dem Rotorblechpaket 8 austretende Rotorwickelkopf 8' dargestellt.

Fig. 5 zeigt einen Querschnitt durch das Statorendteil 2a gemäss Fig. 4, wobei in übersichtlicher Darstellung die Trennung der Wickelkopfkammer 40 von der Kühlgasabströmkammer 29 durch die Trennwand 16 zu sehen ist. Die Trennwand 16 hat die Form eines Teils eines symmetrischen Achtecks und deckt sich mit dem Aussenmantel des Blechpaketes 3. Der mittlere Abschnitt der Ausströmkammer 29, welcher durch die parallelen Flächen der Trennwand 16 und des Gehäuses 2 des Statorendteils 2a gebildet ist, liegt im, gegenüber dem Statormittelteil 1 vorstehenden Teil des Statorendteils 2a. Die Wickelkopfkammer 40 wird durch den Wickelkopf 5 in die innere Wickelkopfkammer 40, welche zugleich die Rotoreinströmkammer bildet und in die äussere Wickelkopfkammer 40' unterteilt.

Die Verschlussdeckel 37 auf den Bypassöffnungen 23, 23', 23" sind in Fig. 5 aus Gründen besserer Uebersicht ebenfalls weggelassen worden. In Fig. 5 sind gleichfalls sowohl der untere 26, als auch der obere Durchbruch 26' ersichtlich, welche die prismatischen Kanäle 43, 43', in den Ecken des Statormittelteils 1, welche in Fig. 5 nicht dargestellt sind, mit der Kühlgasabströmkammer 29 verbinden. In Fig. 5 deckt sich die Trennwand 16 mit dem Mantel des Statorblechpaketes 3. Es ist jedoch auch möglich, dass die Trennwand 16 sowie auch alle übrigen Trennwände 16', 32 der Statorendteile 2a, 2b beispielsweise konvex in bezug auf die Wellenachse ausgebildet sein können. Wesentlich ist, dass die Trennwände 16, 16', 32 nicht innerhalb des der Statorblechaussenkontur eingeschriebenen Inkreises liegen. In den Fig. 1, 2 und 5 sind lediglich drei Trennwände, und zwar in Fig. 1 im rechten Teil des Statorendteils 2a die Trennwand 16', in Fig. 2 im rechten Teil des Statorendteils 2b die Trennwand 32' und in Fig. 5 die Trennwand 16 im linken Teil des Statorendteils 2a dargestellt. Es versteht sich von selbst, dass sich im linken Teil des Statorendteils 2b gleichfalls eine Trennwand befindet, die jedoch in Fig. 1 bis 6 nicht erkennbar ist.

In Fig. 6 ist schliesslich ein Querschnitt durch das Statormittelteil 1 gemäss Fig. 4 zu sehen. In Fig. 6 sind unterer 43- und oberer prismatischer Kanal 43' deutlich zu erkennen, sowie deren Durchbrüche 44, 44' in der Endplatte 3", welcher die Verbindung der prismatischen Kanäle 43, 43' zur linken Kühlgasausströmkammer des Statorendteils 2b herstellt. Diese Kühlgasausströmkammer ist, wie bereits erwähnt, aus den Fig. 1 bis 6 nicht ersichtlich. Jedoch ist der gegenüber dem Statormittelteil 1 vorstehende Teil des Statorendteils 2b, in dem sich diese linke Kühlgasausströmkammer befindet, gut zu erkennen.

Im folgenden soll das erfindungsgemässe Kühlsystem näher erläutert werden :

Generell ist festzuhalten, dass beim erfindungsgemässen Kühlsystem sich in je einem Statorendteil 2a, 2b ein Axialventilator 12 befindet, wobei der Kühlgasstrom symmetrisch, ausgehend von den Statorendteilen 2a, 2b bis annähernd zur Mitte des Statormittelteils 1, gefördert wird. Im allgemeinen kommt Luft als Kühlmedium in Frage, jedoch können für besondere Maschinentypen und Verwendungszwecke auch andere Gase, beispielsweise $H_2$ zur Kühlung herangezogen werden. Die dafür notwendigen Aggregate liegen jedoch ausserhalb des Rahmens des vorliegenden Erfindungsgegenstandes und werden hier nicht berücksichtigt.

Gemäss Fig. 1 und 4, wird das Kühlgas durch die vordere Kühlgaseinströmöffnung 13 in Pfeilrichtung 20 in senkrechter Richtung in die Kühlgaseinströmkammer 19 des Statorendteils 2a durch den Axialventilator 12 eingesaugt, in axiale Richtung umgelenkt und in die innere Wickelkopfkammer 40 gefördert. In der inneren Wickelkopfkammer 40, die gleichzeitig Rotoreinströmkammer ist, wird entsprechend Fig. 4 das Kühlgas in zwei Strömungswege aufgeteilt : Ein erster Kühlgasstrom, der Grossteil des Kühlgases, wird in Pfeilrichtung mit der Bezugsziffer 21 in axialer Richtung in der Rotoreinströmkammer 40 weitergeführt. Ein zweiter Kühlgasstrom gelangt gemäss Pfeilrichtung mit der Bezugsziffer 5' radial nach aussen und strömt durch die Durchtrittsflächen des Wickelkopfes 5 und kühlt diesen.

Der Kühlgasstrom 21 gelangt in die axialen Kühlkanäle 9, strömt in Pfeilrichtung 9', wird danach in die radialen Kanäle 10 (Strömungsrichtung 10') umgelenkt, durchsetzt den Luftspalt 11 und fliesst durch die Statorkanäle 6 (Strömungsrichtung 6').

Entsprechend Fig. 6 strömt das Kühlgas nunmehr dem Statorrücken zu, der, bei der der Erfindung zugrundeliegenden achsensymmetrischen Achteckform des Statorblechpakets 3, nur an vier Mantelflächen, und zwar an denen die Gehäusewand 1' des Statormittelteils nicht anliegt, dem Kühlgas einen freien Durchtritt gewährt. Durch eine strömungsbegünstigende Ausbildung der in den radialen Kühlkanäle 6 liegenden Distanzstege im Statorblechpaket 3, wird der Hauptstrom des Kühlgases zu den vier, nicht durch das Gehäuse 1' des Statormittelteils 1 abgedeckten Mantelflächen gelenkt, so dass Verwirbelungen oder sonstige Strömungshemmnisse am Statorrücken weitgehend vermieden werden.

Wie in Fig. 6 zu sehen ist, gelangt das Kühlgas nach dem Verlassen der Kühlkanäle 6' des Statorblechpakets 3, in denen es weitgehend radial und zum Teil auch tangential entsprechend der Pfeilrichtung mit der Bezugsziffer 6' geströmt ist, in die prismatisch ausgebildeten Eckkammern 43, 43', welche durch den Statorrücken und das Gehäuse 1' des Statormittelteils 1 begrenzt sind und strömt anschliessend vom Statormittelteil 1 den beiden Statorendteilen 2a bzw. 2b zu.

Der Kühlgasstrom des zweiten Strömungsweges strömt, wie bereits schon erwähnt, durch den Wickelkopf 5 in radialer Richtung nach aussen und gelangt in die äussere Wickelkopfkammer 40', die, wie in Fig. 5 gut zu sehen ist, durch die Trennwand 16 von der Abströmkammer 29 abgetrennt ist. Beide Kammern 40', 29 stehen jedoch über den Bypassöffnungen 23, 23', 23" in der Trennwand 16 miteinander in Verbindung. Das Kühlgas wird nunmehr entsprechend der Richtung der Pfeile mit den Bezugsziffern 41, 41', 41" durch die Bypassöffnungen 23, 23', 23" in die Abströmkammer 29 geführt.

Wie in Fig. 5 dargestellt, vermischen sich nunmehr in der Abströmkammer 29, die ursprünglich in der inneren Wickelkopfkammer 40 aufgeteilten zwei Teilkühlströme wieder : Der erste Teilkühlstrom, der gemäss Fig. 5 durch den unteren linken Durchbruch 26 gemäss der Pfeilrichtung mit der Bezugsziffer 27 und durch den oberen linken Durchbruch 26' gemäss der Pfeilrichtung mit der Bezugsziffer 27' in den Abströmraum 29 zurückgeführt wird, mit dem zweiten Teilkühlstrom, der in Fig. 5 von der inneren Wickelkopfkammer 40 gemäss der Pfeilrichtung mit der Bezugsziffer 5' aus zuerst in die äussere Wickelkopfkammer 40' und danach durch die drei in der Trennwand 16 sich befindenden Bypassöffnungen 23, 23', 23" gemäss der Pfeilrichtung mit den Bezugsziffern 41, 41', 41" geführt wird. Beide nunmehr erwärmten und in der Kühlgasabströmkammer 29 wieder vereinigten Kühlgasteilströme werden schliesslich gemeinsam gemäss der Pfeilrichtung mit der Bezugsziffer 28 durch die Kühlgasaustrittsöffnung 14 des Statorendteils 2a ins Freie abgeführt bzw. werden einer in Fig. 5 nicht dargestellten Anlage zur Rückkühlung des erwärmten Gases zugeführt.

In Fig. 1 ist in axonometrischer Darstellung der Weg des Kühlgases aus der oberen linken prismatischen Eckkammer 43 durch den Durchbruch 26' gemäss der Pfeilrichtung mit der Bezugsziffer 27' in die linke Kühlgasabströmkammer 29 des Statorendteils 2a ersichtlich. Das gemeinsame Austreten beider Kühlgasteilströme erfolgt wiederum gemäss der Pfeilrichtung mit der Bezugsziffer 28.

In Fig. 1 sind die Strömungsverhältnisse des Kühlgases in der rechten Kühlgasabströmkammer 29' nochmals anschaulich dargestellt. Das Kühlgas aus der prismatischen Eckkammer 43" gelangt gemäss der Pfeilrichtung mit der Bezugsziffer 25 durch den Durchbruch 18 der Endplatte 3' in die rechte Abströmkammer 29' des Statorendteils 2a.

An der unteren, nicht sichtbaren Bypassöffnung, sowie aus der mittleren Bypassöffnung 17 tritt Kühlgas gemäss der Pfeilrichtung 24 für die untere, nicht sichtbaren Bypassöffnung, und der Pfeilrichtung 22 für die mittlere Bypassöffnung 17 in die Abströmkammer 29' ein und vermischt sich dort mit dem durch den Rotor 8- und Statorkörper 3 der elektrischen Maschine geführten und durch den prismatischen Kanal 43" wieder zurückströmenden Kühlgasteilstrom gemäss der Pfeilrichtung mit der Bezugsziffer 25. In genau der gleichen Weise wie sich die Kühlgasführung im Statorendteil 2a vollzieht, geschieht sie ebenfalls im Statorendteil 2b, wie dies in Fig. 2 veranschaulicht ist.

Das Kühlgas strömt gemäss der Pfeilrichtung 20 durch die Einströmöffnung 13' in den Ansaugraum 19' des Statorendteils 2b ein und wird, nach vorheriger Aufteilung in zwei Teilströme, und Durchströmung in derselben Weise, wie vorstehend bei den Fig. 1, 4, 5 eingehend beschrieben, in die linke nicht dargestellte und rechte Ausströmkammern 31' des Statorendteils 2b geführt, und strömt gemäss den Pfeilrichtungen mit der Bezugsziffer 28, sowohl aus der linken wenig sichtbaren Ausströmkammer durch die Ausströmöffnung 30, als auch aus der rechten Ausströmkammer 31' durch die Ausströmöffnung 30' aus dem Statorendteil 2b aus.

In Fig. 2 ist ausserdem zu sehen, dass das erwärmte Kühlgas des ersten Teilstromes in der rechten oberen prismatischen Eckkammer 43" gemäss der Pfeilrichtung mit der Bezugsziffer 36 in das Statorendteil 2b zurückströmt. In der rechten Kühlgasabströmkammer 31' des Statorendteils 2b vermischt es sich dann mit den gleichzeitig aus den Bypassöffnungen 33, 33', 33" in der Trennwand 32' gemäss den Pfeilrichtungen mit den Bezugsziffern 34, 34', 34" austretenden zweiten Kühlgasteilstrom und beide Teilströme werden dann gemeinsam durch die Austrittsöffnung 30' aus dem Statorendteil 2b abgeführt.

Mit Rücksicht auf eine optimale Kühlung sind, wie anhand von Fig. 5 erläutert werden soll, bestimmte Querschnittsflächen der Durchbrüche 26, 26' und der Bypassöffnungen 23, 23', 23" in der Trennwand 16 erforderlich. Dabei gilt, dass das Verhältnis der Summe der Querschnittsflächen $S_3$, $S_4$, $S_5$ der Bypassöffnungen 23, 23', 23″ in der Trennwand 16 in bezug auf die Summe der Querschnittsflächen $S_1$, $S_2$ der Durchbrüche 26, 26′ im Bereich von 0,15 bis 0,3 liegt. Dieses Verhältnis gilt selbstverständlich ebenfalls für die rechte Kühlgasabströmkammer 29′ des Statorendteils 2a, als auch für die beiden Kühlgasabströmkammern, die nicht dargestellte linke und die rechte Kühlgasabströmkammer 31′ des Statorendteils 2b. Dieses Verhältnis kann im vorgenannten Bereich durch Regelung der Querschnittsflächen $S_3$, $S_4$, $S_5$ der Bypassöffnungen 23, 23′, 23″ mittels der verschiebbaren Abschlussdeckel 37 verändert werden, womit unmittelbar und gezielt die Kühlwirkung auf die zu kühlenden Maschinenteile, sowohl im ersten, als auch im zweiten Kühlkreis gesteuert werden kann.

Zur Erzielung einer optimalen Strömungsgeschwindigkeit des Kühlgases in der Querschnittsfläche $S_6$ des Mittelteils der Kühlgasausströmkammer 29, welche sich gemäss Fig. 5 aus der kleinsten Beabstandung durch das Gehäuse 2′ und dem vertikalen Abschnitt der Trennwand 16 über die gesamte Länge der Trennwand 16 ergibt, ist das Verhältnis $S_6$ in bezug auf die Summe der Querschnittsfläche $S_1$ des unteren Durchbruchs 26 und der Querschnittsfläche $S_3$ der unteren Bypassöffnung 23 in der Trennwand 16 sowie der halben Querschnittsfläche $S_4$ der mittleren Bypassöffnung 23′ in der Trennwand 16 grösser als 1. Dieses Verhältnis gilt selbstverständlich ebenso für alle übrigen Kühlgasausströmkammern 29, 31′ in den Statorendteilen 2a, 2b.

In Fig. 1 bis 6 wurde die Erfindung anhand einer beispielsweisen Ausführungsform, bei der die Aussenkontur des Blechpakets 3 die Form eines annähernd achsensymmetrischen Achtecks aufweist, dargestellt.

Es versteht sich von selbst, dass die Erfindung auch bei Wechselstrommaschinen mit anderem Blechschnitt zur Anwendung kommen kann, deren Kühlgasausströmraum zwischen dem Statorrücken und dem Maschinengehäuse über die gesamte axiale Länge des Statormittelteils unterbrochen und in einzelne in Umfangsrichtung, nicht miteinander in Verbindung stehende Teilkühlgasausströmräume unterteilt ist. So z. B. bei Ausführungsformen mit sechs- oder zwölfeckiger oder kreisförmiger Blechaussenkontur und einem quadratischen Gehäuse 1′. Hierbei werden ebenfalls in den Gehäuseecken durch die Wände des Gehäuses 1 und den Blechrücken begrenzte und durch das Blechpaket 3 getrennte und sich über die gesamte Blechpaketlänge erstreckende Kanäle 43, 43′, 43″, 43‴ für die Abfuhr des Kühlgases ausgebildet.

## Patentansprüche

1. Gasgekühlte Wechselstrommaschine mit einem Statormittelteil und zwei Statorendteilen (2a, 2b) mit einem Ventilator (12) an jedem Rotorende und einer dem Ventilator (12) zugeordneten Verschalung (15) zur Kühlmittelführung, wobei das das Mittelteil (1) bildende, zwischen zwei Endplatten (3′, 3″) eingespannte Statorblechpaket (3), durch radial verlaufende Kühlkanäle (6) in einzelne Teilpakete unterteilt ist, wobei die Kühlkanäle (6) durch Distanzstege oder -bolzen gebildet sind, die auf einer Kanalseite auf einem Teilpaket-Endblech befestigt sind, und der Statorblechkörper (3) von einem Gehäuse (1) mit quadratischem Querschnitt umgeben ist, dadurch gekennzeichnet, dass in den Gehäuseecken nur durch die Wände des Gehäuses (1′) und den Blechpaketrücken begrenzte, durch das Blechpaket (3) getrennte, sich über die gesamte Blechpaketlänge erstreckende Kanäle (43, 43′, 43″, 43‴) für die Abfuhr des Kühlgases ausgebildet sind, dass die Statorendteile (2a, 2b) sowohl als Kühlgaseintritts- als auch als -austrittsgehäuse ausgebildet sind, deren Höhe annähernd derjenigen des Statormittelteils (1) entspricht, während sie nach beiden Seiten hin gegenüber dem Statormittelteil (1) vorstehen, und welches Gehäuse (2′, 2″) im wesentlichen durch Trennwände (16, 16′; 32, 32′) und die Verschalung (15) in vier Kammern unterteilt ist, eine Kühlgasansaugkammer (19, 19′), eine Wickelkopfkammer (40, 40′) und paarweise, symmetrisch zur Vertikalebene angeordnete Kühlgasausströmkammern (29, 29′; 31, 31′), dass je eine Kühlgasausströmkammer (29, 29′; 31, 31′) mindestens eine Ausströmöffnung (14; 30, 30′) aufweist und je mit einem unteren (43, 43″) und oberen Kanal (43′, 43‴) des Statormittelteils (1) über Durchbrüche (26, 26′; 44, 44′) in den Endplatten (3′, 3″) des Statormittelteiles in Verbindung steht, dass die Trennwände (16, 16′, 32) in jedem Statorendteil 2a, 2b zwischen der Wickelkopfkammer (40, 40′) und den beiden Kühlgasausströmkammern (29, 29′; 31, 31′) paarweise und symmetrisch zur Vertikalebene angeordnet sind und die Wickelkopfkammer (40, 40′) und die Kühlgasausströmkammern (29, 29′; 31, 31′) voneinander trennen, und dass die Trennwände (16, 16′; 32) mit Bypassöffnungen (17, 23, 23′, 23″; 33′, 33″) versehen sind, durch welche das Kühlgas in einem zweiten Kühlzweig durch den Wickelkopf (5), parallel zu einem ersten, durch den Rotor (8)- und Statorkörper (3) geleiteten Kühlzweig, geführt ist (Fig. 4).

2. Wechselstrommaschine nach Anspruch 1, dadurch gekennzeichnet, dass die Aussenkontur des Blechpakets (3) kreisrund oder die Form eines annähernd achsensymmetrischen n-Ecks aufweist, wobei n geradzahlig und grösser als 6 ist, dass die parallel zu den Gehäusewänden (1′) verlaufenden Mantelflächen des Blechkörpers an den ihnen zugeordneten Gehäusewänden (1′) anliegen und durch sie in radialer Richtung abgestützt sind, dass die über besagte Seitenflächen des Blechpakets (3) hinausragenden Wände des Gehäuses (1′) unter Ausbildung von über die gesamte Blechpaketlänge sich erstreckenden Kanälen (43, 43′, 43″, 43‴) für die Abfuhr des Kühlgases fest miteinander verbunden sind.

3. Wechselstrommaschine nach Anspruch 1, dadurch gekennzeichnet, dass die Trennwände (16, 16', 32) in den Statorendteilen sich in axialer Richtung von den Endplatten (3', 3") bis zu der den Ventilatoren zugeordneten Verschalung (15) erstrecken, dass der Querschnitt der Trennwände (16, 16' ; 32, 32') sich annähernd mit der Aussenkontur des Statorbleches deckt oder die Trennwände (16, 16' ; 32, 32') ausserhalb des durch den Inkreis an die Blechaussenkontur erhaltenen fiktiven Zylinders liegen, und dass die Trennwände (16, 16' ; 32, 32') an der jeweiligen Innenseite der unteren und oberen Gehäusewand der Statorendteile (2a, 2b) anliegen, dass sich jeweils in den Trennwänden (16, 16' ; 32, 32'), annähernd über durch Umfang gleichmässig verteilt Bypassöffnungen (17 ; 23, 23', 23" ; 33, 33', 33") befinden, und das Mittel (37) zur Variierung derer wirksamen Querschnittsflächen vorgesehen sind (Fig. 5).

4. Wechselstrommaschine nach Anspruch 3, dadurch gekennzeichnet, dass die Trennwände (16, 16' ; 32, 32') in den Statorendteilen (2a, 2b) jeweils ein vertikales mittleres Teil und ein abgewinkeltes unteres und oberes Teil aufweisen, die sich in axialer Richtung von den Endplatten (3', 3") bis zu der den Ventilatoren (12) zugeordneten Verschalung (15) erstrecken, dass Trennwände (16, 16' ; 32, 32') kongruent mit der Aussenkontur der sechs Seitenkanten des achsensymmetrischen Achtecks des Blechpakets (3) ist, dass sich im mittleren Teil und den abgewinkelten unteren und oberen Teilen der Trennwände (16, 16' ; 32, 32') in deren Zentrum je eine Bypassöffnung (17, 23, 23', 23" ; 33, 33', 33") befindet, und dass Mittel zur Variierung derer wirksamen Querschnittsflächen ($S_3$, $S_4$, $S_5$) vorgesehen sind (Fig. 5).

5. Wechselstrommaschine nach Anspruch 3 oder 4, dadurch gekennzeichnet, dass die Mittel durch Abschlussdeckel (37) gebildet sind, die über den Bypassöffnungen (17, 23, 23', 23" ; 33, 33', 33") in einer Führungseinrichtung (38, 39) verschiebbar angeordnet sind (Fig. 3).

6. Wechselstrommaschine nach einem der Ansprüche 1 bis 5, dadurch gekennzeichnet, dass in der Kühlgasausströmkammer (29, 29', 31, 31') das Verhältnis der Summe der freien Querschnittsflächen ($S_3$, $S_4$, $S_5$) der Bypassöffnungen (17, 23, 23', 23" ; 33, 33', 33") in bezug auf die Summe der Querschnittsflächen ($S_1$, $S_2$) der Durchbrüche (26, 26' ; 44, 44') im Bereich zwischen 0,15 bis 0,3 liegt (Fig. 5).

7. Wechselstrommaschine nach einem der Ansprüche 1 bis 6, dadurch gekennzeichnet, dass in der Kühlgasausströmkammer (29, 29' ; 31, 31') die Querschnittsfläche $S_6$ des Mittelteils der Kühlgasausströmkammer (29, 29' ; 31, 31'), welche sich aus der Beabstandung des vertikalen mittleren Teiles der Trennwände (16, 16' ; 32) von der Gehäusewand (2', 2") der Statorendteile (2a, 2b) und der axialen Länge der Trennwände (16, 16', 32, 32') ergibt, im Verhältnis zur Summe der Querschnittsfläche ($S_1$) des unteren Durchbruches (18, 26, 44) und der freien Querschnittsfläche ($S_3$), der im unteren abgewinkelten Teil der Trennwände (16, 16' ; 32, 32') befindlichen Bypassöffnung (23, 33) und der halben freien Querschnittsfläche ($S_4$) der im mittleren Teil der Trennwände (16, 16' ; 32, 32') befindlichen Bypassöffnung (17, 23', 33'), grösser als 1 ist (Fig. 5).

## Claims

1. Gas-cooled alternating-current machine comprising a stator centre part and two stator end parts (2a, 2b) and having a fan (12) at each rotor end and a casing (15), which is associated with the fan (12), for conducting the coolant, in which arrangement the laminated stator core (3) which forms the centre part (1) and is clamped between two end plates (3', 3") is subdivided into individual part-cores by radially extending cooling ducts (6), the cooling ducts (6) being formed by spacing bars or bolts which are mounted on a part-core end plate on one duct side and the laminated stator body (3) being surrounded by a housing (1) having a square cross-section, characterised in that ducts (43, 43', 43", 43'''), which extend over the entire length of the laminated core and are separated by the laminated core (3) and are limited only by the walls of the housing (1') and the back of the laminated core, are constructed in the corners of the housing for removing the cooling gas, that the stator end parts (2a, 2b) are constructed both as cooling-gas inlet and outlet housings, the height of which approximately corresponds to that of the stator centre part (1) whereas they project towards both sides with respect to the stator centre part (1), and which housing (2', 2") is essentially subdivided by dividing walls (16, 16' ; 32, 32') and the casing (15) into four chambers : a cooling-gas intake chamber (19, 19'), an end-turn chamber (40, 40') and cooling-gas outlet chambers (29, 29' ; 31, 31') arranged in pairs symmetrically to the vertical plane, that each cooling-gas outlet chamber (29, 29' ; 31, 31') has at least one outlet opening (14 ; 30, 30') and is connected in each case to a lower (43, 43") and upper duct (43', 43''') of the stator centre part (1) via perforations (26, 26' ; 44, 44') in the end plates (3', 3") of the stator centre part, that the dividing walls (16, 16', 32) in each stator end part 2a, 2b are arranged in pairs and symmetrically to the vertical plane between the end-turn chamber (40, 40') and the two cooling-gas outlet chambers (29, 29' ; 31, 31') and separate the end-turn chamber (40, 40') and the cooling-gas outlet chambers (29, 29' ; 31, 31') from each other and that the dividing walls (16, 16' ; 32) are provided with bypass openings (17, 23, 23', 23" ; 33, 33', 33") through which the cooling gas is conducted in a second cooling branch through the end-turn (5) in parallel with a first cooling branch guided through the rotor (8) and stator body (3) (Figure 4).

2. Alternating-current machine according to Claim 1, characterised in that the outside contour of the laminated core (3) is circular or has an approximately axially symmetrical n-cornered shape, n being an even number and greater than 6, that the surface areas of the laminated body which are parallel to the housing walls (1') rest against the housing walls (1') associated with them and are supported by them in the radial direction, that the walls of the housing (1') which project past the said side faces of the laminated core (3) are rigidly joined to each other whilst forming ducts (43, 43', 43", 43''') which extend over the entire length of the laminated core for removing the cooling gas.

3. Alternating-current machine according to Claim 1, characterised in that the dividing walls (16, 16', 32) in the stator end parts extend in axial direction from the end plates (3', 3") to the casing (15) associated with the fans, that the cross-section of the dividing walls (16, 16' ; 32, 32') approximately coincides with the outside contour of the stator lamination or the dividing walls (16, 16' ; 32, 32') are located outside the fictitious cylinder obtained by the incircle inscribed on the outside lamination contour, and that the dividing walls (16, 16' ; 32, 32') rest against the respective insides of the lower and upper housing wall of the stator end parts (2a, 2b), that bypass openings (17 ; 23, 23', 23" ; 33, 33', 33") are located in each case in the dividing walls (16, 16' ; 32, 32') distributed approximately uniformly over the periphery, and that means (37) are provided for varying the effective cross-sectional areas of these bypass openings (Figure 5).

4. Alternating-current machine according to Claim 3, characterised in that the dividing walls (16, 16' ; 32, 32') in the stator end parts (2a, 2b) have in each case a vertical centre part and an angled lower and upper part which extend in the axial direction from the end plates (3', 3") to the casing (15) associated with the fans (12), that its dividing walls (16, 16' ; 32, 32') are congruent with the outside contour of the six side edges of the axially symmetrical octagon of the laminated core (3), that one bypass opening (17, 23, 23', 23" ; 33, 33', 33") each is located in the centre of the centre part and of the angled lower and upper parts of the dividing walls (16, 16' ; 32, 32'), and that means are provided for varying the effective cross-sectional areas ($S_3$, $S_4$, $S_5$) of these bypass openings (Figure 5).

5. Alternating-current machine according to Claim 3 or 4, characterised in that the means are formed by closing covers (37) which are displaceably arranged in a guiding device (38, 39) over the bypass openings (17, 23, 23', 23" ; 33, 33', 33") (Figure 3).

6. Alternating-current machine according to one of Claims 1 to 5, characterised in that, in the cooling-gas outlet chamber (29, 29', 31, 31'), the ratio of the sum of the free cross-sectional areas ($S_3$, $S_4$, $S_5$) of the bypass openings (17, 23, 23', 23" ; 33, 33', 33") is within the range of between 0.15 to 0.3 with respect to the sum of the cross-sectional areas ($S_1$, $S_2$) of the perforations (26, 26' ; 44, 44') (Figure 5).

7. Alternating-current machine according to one of Claims 1 to 6, characterised in that, in the cooling-gas outlet chamber (29, 29' ; 31, 31'), the cross-sectional area $S_6$ of the centre part of the cooling-gas outlet chamber (29, 29' ; 31, 31'), which results from the spacing of the vertical centre part of the dividing walls (16, 16' ; 32) from the housing wall (2', 2") of the stator end parts (2a, 2b) and the axial length of the dividing walls (16, 16', 32, 32'), is greater than 1 with respect to the sum of the cross-sectional area ($S_1$) of the lower perforation (18, 26, 44) and of the free cross-sectional area ($S_3$) of the bypass opening (23, 33) located in the lower angled part of the dividing walls (16, 16' ; 32, 32') and of half the free cross-sectional area ($S_4$) of the bypass opening (17, 23', 33') located in the centre part of the dividing walls (16, 16' ; 32, 32') (Figure 5).

## Revendications

1. Machine à courant alternatif refroidie par un gaz avec un stator comportant une partie médiane et deux parties terminales (2a, 2b), avec un ventilateur (12) à chaque extrémité du rotor et avec un chemisage (15) adapté au ventilateur (12) pour le guidage de l'agent réfrigérant, dans la quelle le paquet de tôles (3) du stator, serré entre deux plaques d'extrémité (3', 3") et constituant la partie médiane (1) est divisé en paquets partiels individuels par des canaux de refroidissement (6) radiaux, dans laquelle les canaux de refroidissement (6) radiaux sont formés par des nervures ou des boulons d'écartement qui, sur un côté du canal, sont fixés sur une tôle d'extrémité d'un paquet partiel, et dans laquelle le paquet de tôles (3) du stator est entouré d'une enceinte (1') de section carrée, caractérisée en ce que dans les angles de l'enceinte sont formés des canaux (43, 43', 43", 43''') d'évacuation du gaz de refroidissement, qui ne sont délimités que par les parois de l'enceinte (1') et par l'arrière du paquet de tôles, qui sont séparés par le paquet de tôles (3) et qui s'étendent sur toute la longueur du paquet de tôles, en ce que les parties terminales (2a, 2b) du stator constituent des enceintes aussi bien d'entrée que de sortie du gaz de refroidissement, dont la hauteur correspond approximativement à celle de la partie médiane (1) du stator, mais qui font saillie des deux côtés par rapport à la partie médiane (1) du stator, enceintes (2', 2") qui sont divisées en quatre chambres essentiellement par des cloisons (16, 16' ; 32, 32') et par le chemisage (15), à savoir une chambre (19, 19') d'aspiration du gaz de refroidissement, une chambre (40, 40') de tête de la bobine, et des chambres (29, 29' ; 31, 31') de sortie du gaz de refroidissement disposées par paires symétriquement par rapport au plan vertical, en ce que chacune des chambres (29, 29' ; 31, 31') de sortie du gaz de refroidissement comporte au moins une ouverture de sortie (14 ; 30, 30') et communique avec un canal inférieur (43, 43") et un canal supérieur (43', 43''') de la partie médiane (1) du stator par des percées (26, 26' ; 44, 44') ménagées dans les plaques d'extrémité (3', 3") de la partie médiane du stator, en ce que les cloisons (16, 16', 32) sont disposées par paires et symétriquement par rapport au plan vertical dans chaque partie terminale (2a, 2b) du stator, entre la chambre (40, 40') de la tête de bobine et les deux chambres (29, 29' ; 31, 31') de sortie du gaz de refroidissement et séparent l'une de l'autre la chambre (40, 40') de la tête de bobine et les chambres (29, 29' ; 31, 31') de sortie du gaz de refroidissement, et en ce que les cloisons (16, 16', 32) sont pourvues d'ouvertures de dérivation (17, 23, 23', 23" ; 33, 33', 33") à travers lesquelles le gaz de refroidissement est conduit dans une seconde branche de refroidissement à travers la tête de bobine, parallèlement à une première branche de refroidissement traversant le corps (8) du rotor et le corps (3) du stator (Fig. 4).

2. Machine à courant alternatif suivant la revendication 1, caractérisée en ce que le contour extérieur du paquet de tôles (3) du stator présente une forme circulaire ou la forme d'un polygone à n côtés présentant approximativement une symétrie axiale, n étant un nombre pair supérieur à 6, en ce que les faces de l'enveloppe du paquet de tôles orientées parallèlement aux parois de l'enceinte (1') sont appliquées sur les parois de l'enceinte (1') qui leur font face et sont soutenues par celles-ci en direction radiale, en ce que les parois de l'enceinte (1') s'étendant au-delà desdites faces latérales du paquet de tôles (3) sont fermement assemblées l'une à l'autre en formant des canaux (43, 43', 43", 43''') d'évacuation du gaz de refroidissement qui s'étendent sur toute la longueur du paquet de tôles.

3. Machine à courant alternatif suivant la revendication 1, caractérisée en ce que les cloisons (16, 16', 32) prévues dans les parties terminales du stator s'étendent en direction axiale depuis les plaques d'extrémité (3', 3") jusqu'au chemisage (15) adapté aux ventilateurs, en ce que la section des cloisons (16, 16' ; 32, 32') coïncide approximativement avec le contour extérieur du paquet de tôles du stator ou en ce que les cloisons (16, 16' ; 32, 32') se trouvent en dehors du cylindre fictif correspondant au cercle inscrit dans le contour extérieur du paquet de tôles, en ce que les cloisons (16, 16' ; 32, 32') touchent la face intérieure respective de la paroi inférieure et supérieure de l'enceinte des parties terminales (2a, 2b) du stator, en ce que dans chacune des cloisons (16, 16' ; 32, 32') se trouvent des ouvertures de dérivation (17 ; 23, 23', 23" ; 33, 33', 33") réparties approximativement de façon uniforme sur la périphérie, et en ce qu'il est prévu des moyens (37) pour faire varier la section effective de celles-ci (Fig. 5).

4. Machine à courant alternatif suivant la revendication 3, caractérisée en ce que chacune des cloisons (16, 16' ; 32, 32') prévue dans les parties terminales (2a, 2b) du stator présente une portion médiane verticale et des portions inclinées inférieure et supérieure, qui s'étendent en direction axiale depuis les plaques d'extrémité (3', 3") jusqu'au chemisage (15) adapté aux ventilateurs (12), en ce que les cloisons (16, 16' ; 32, 32') coïncident avec le contour extérieur des six arêtes latérales de l'octogone à symétrie axiale du paquet de tôles (3), en ce qu'au centre de chacune des portions médianes et des portions inclinées inférieures et supérieures des cloisons (16, 16' ; 32, 32') se trouve une ouverture de dérivation (17 ; 23, 23', 23" ; 33, 33', 33") et en ce qu'il est prévu des moyens pour faire varier les sections effectives (S3, S4, S5) de celles-ci (Fig. 5).

5. Machine à courant alternatif suivant la revendication 3 ou 4, caractérisée en ce que les moyens sont constitués par des couvercles de fermeture (37) qui peuvent coulisser au-dessus des ouvertures de dérivation (17 ; 23, 23', 23" ; 33, 33', 33") dans un dispositif de guidage (38, 39) (Fig. 3).

6. Machine à courant alternatif suivant l'une des revendications 1 à 5, caractérisée en ce que le rapport existant dans la chambre (29, 29', 31, 31') de sortie du gaz de refroidissement entre la somme des sections libres (S3, S4, S5) des ouvertures de dérivation (17 ; 23, 23', 23" ; 33, 33', 33") et la somme des sections (S1, S2) des percées (26, 26' ; 44, 44') est situé dans le domaine compris entre 0,15 et 0,3 (Fig. 5).

7. Machine à courant alternatif suivant l'une des revendications 1 à 6, caractérisée en ce que, dans la chambre (29, 29' ; 31, 31') de sortie du gaz de refroidissement, le rapport entre d'une part la section S6 de la partie médiane de la chambre (29, 29' ; 31, 31') de sortie du gaz de refroidissement, que l'on obtient en multipliant la distance entre la portion médiane verticale des cloisons (16, 16' ; 32) et la paroi (2', 2") de l'enceinte des parties terminales (2a, 2b) du stator par la longueur axiale des cloisons (16, 16' ; 32, 32'), et d'autre part la somme de la section (S1) de la percée inférieure (18, 26, 44), de la section libre (S3) de l'ouverture de dérivation (23, 33) ménagée dans la partie inclinée inférieure des cloisons (16, 16' ; 32, 32') et de la moitié de la section (S4) de l'ouverture de dérivation (17, 23', 33') ménagée dans la portion médiane des cloisons (16, 16' ; 32, 32'), est supérieur à 1 (Fig. 5).

FIG. 1

Fig. 2

<u>X</u>

Fig.3

Fig.4

Fig.5

Fig. 6